# EUROPEAN PATENT SPECIFICATION

(11) **EP 2 309 865 B1**
(45) Date of publication and mention of the grant of the patent: **22.10.2014**
(21) Application number: 09761510.8
(22) Date of filing: 12.06.2009
(51) Int. Cl.: A21D 2/18, A23L 1/0522, A23L 1/09, A21D 13/00

(54) **WAFER**
WAFFEL
GAUFRETTE

(30) Priority: 13.06.2008 GB 0810856; 12.11.2008 GB 0820696
(43) Date of publication of application: 20.04.2011
(73) Proprietor: Nestec S.A., 1800 Vevey (CH)
(72) Inventor: ARRACHID, Abdessamad, York YO30 7AU (GB)
(74) Representative: Gagliardi, Tatiana
(86) International application number: PCT/EP2009/004243
(87) International publication number: WO 2009/149947

(56) References cited:
- EP-A- 1 393 631
- MANUHARKUMAR B ET AL: "MISCHMEHLE MIT INDISCHEM MAIS FUER DIE HERSTELLUNG VON MUERBKEKS UND FLACHWAFFELN" GETREIDE MEHL UND BROT, BOCHUM, DE, vol. 32, no. 5, 1 May 1978 (1978-05-01), pages 121-124, XP000853876 ISSN: 0367-4177
- STEFFI HEMPEL ET AL: "Influence of inulin modification and flour type on the sensory quality of prebiotic wafer crackers" EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 224, no. 3, 31 March 2006 (2006-03-31), pages 335-341, XP019458174 ISSN: 1438-2385
- ANONYMOUS: "Cargill Dry MD 01913"[Online] 1 March 2003 (2003-03-01), pages 1-2, XP002543094 Retrieved from the Internet: URL:http://www.cargillfoodproducts.com/pdf s/starch/01913.pdf> [retrieved on 2009-08-26]
- LEMPEREUR I ET AL: "Les pâtes liquides: applications aux gaufrettes = Liquid dough. Application for wafer production" 1 June 2001 (2001-06-01), INDUSTRIES DES CEREALES, MMERCIALES, PARIS, PAGE(S) 20 - 23 , XP009121818 ISSN: 0245-4505 the whole document
- S.M.LAKSHMINARAYAN ET AL.: "Effect of maltodextrin and emulsifiers on the viscosity of cake batter and on the quality of cakes" JOURNAL OF THE SCIENCE OF FOOD AND AGRICULTURE, vol. 86, 2006, pages 706-712, XP002543095
- F.AVALTRONI ET AL.: "Maltodextrin molecular weight distribution influence on the glass transition temperature and viscosity in aqueous solutions" CARBOHYDRATE POLYMERS, vol. 58, 2004, pages 323-334, XP002543096
- DATABASE GNPD [Online] MINTEL 01 January 2003 ANONYMOUS: 'Tasty Cream Wafer' Retrieved from www.gnpd.com Database accession no. 185835
- DATABASE GNPD [Online] MINTEL 01 April 2008 ANONYMOUS: 'Kit Kat Kyuemon' Retrieved from www.gnpd.com Database accession no. 892321
- DATABASE GNPD [Online] MINTEL 01 May 2008 ANONYMOUS: 'Chocolate Wafer Stick' Retrieved from www.gnpd.com Database accession no. 912483
- S.Cauvain, L.Young: "Bakery Food Manufacture and Quality", 1 January 2008 (2008-01-01), Blackwell Publishing pages 85-87, * the whole document *

## Description

### Field of the invention

The present invention relates to a no- or low-sugar wafer batter containing solid particulates, being maltodextrins.

### Background of the invention

Wafers are baked products which are made from wafer batter and have crisp, brittle and fragile consistency. They are thin, with an overall thickness usually from < 1 to 6 mm and typical product densities range from 10 to 30 mg/cm³.

Wafers are manufactured by preparing a batter containing mainly flour and water to which other minor ingredients may be added. A batter for use in the manufacture of commercial flat wafers typically contains 35 to 45 wt % flour. Common formulations may also comprise at least one of the following ingredients: fat and/or oil, an emulsifier such as lecithin, sugar, whole egg, salt, sodium bicarbonate, ammonium bicarbonate, skim milk powder, soy flour, yeast, and/or enzymes such as xylanases or proteases, for example.

Wafers may be distinguished from other biscuits/cookies in that wafers are the result of baking a batter whereas biscuits/cookies are usually baked out of a dough. Batter is a liquid suspension that will flow through a pipe whereas biscuit dough is rather stiff to permit rolling and flattening and normally has a water content of less than 50 parts per 100 parts of flour.

Two basic types of wafer are described by K.F. Tiefenbacher in "Encyclopaedia of Food Science, Food Technology and Nutrition p 417-420 - Academic Press Ltd London - 1993":
1) No- or low-sugar wafers. The finished biscuits contain from zero to a low percentage of sucrose or other sugars, typically up to 10 % by weight sugars based on the weight of the wafer. Typical products are flat and hollow wafer sheets, moulded cones or fancy shapes.
2) High-sugar wafers. More than 10 % of sucrose or other sugars are responsible for the plasticity of the freshly baked sheets. They can be formed into different shapes before sugar recrystallization occurs or before sugar matrix re-solidification. Typical products are moulded and rolled sugar cones, rolled wafer sticks and deep-formed fancy shapes.

No- or low sugar wafers have a different texture and taste compared to high sugar wafers. When layered with a filling, they are used as the centre of well known chocolate confectionery products such as KIT KAT^{®}.

In a common method of no- or low-sugar wafer manufacture, the batter is fed by pumping to a heated baking surface comprising a series of wafer baking moulds corresponding to the type of wafer desired, each wafer baking mould consisting of two heated engraved metal plates, also known as baking irons having upper and lower sections arranged to open and close, one of which may be moved relative to the other. The baking moulds are disposed one after the other, continuously circulating through a wafer oven by travelling from one end to the other and which are opened and closed in the front entrance of the wafer oven for the depositing of the batter and removal of the individual wafers. The wafer baking moulds pass through a baking oven for a determined time at a certain temperature, for instance 1-3 minutes at 140 °C to 180 °C, to produce large flat wafer sheets with a low moisture content.

The surfaces of wafers are precisely formed, following the surface shape of the plates between which they were baked. They often carry a pattern on one surface or on both. After cooling, the wafers are processed according to the requirements of the final product.

Enzymes may also be used in wafer manufacture. For example endo-proteinases (such as neutral bacterial proteinase from Bacillus subtilis or papain from Carica papaya) may be used to hydrolyse the peptide bonds in wheat gluten, which has the effect of preventing the formation of gluten lumps, and xylanase (pentosanase) may be used to hydrolyse the xylan backbone in arabinoxylan (pentosan), which has the effect of decreasing the water binding capacity of wheat pentosans, redistributing water among other flour components and reducing batter viscosity. Combinations of these enzymes may also be used, mainly to decrease batter viscosity, make batters more homogenous, increase machinability, allow standard flour grades to be employed and/or increase the flour level in batter. These preparations have become widely accepted (Food Marketing & Technology, April 1994, p. 14).

The densest wafer that is produced using traditional wafer ovens is KIT KAT^{®}. Typically the density of KIT KAT^{®} wafer is 30-35 mg/cm³. It may be desirable to increase the density of a wafer to increase the wafer crispness. However, attempts to increase the weight of the wafer have led to the formation of gluten strands in the batter which give the batter a viscous and stringy consistency making processing difficult. In particular, during the manufacture of wafers in 50-plate ovens batter is deposited onto moving plates in a continuous process. The batter is deposited using a batter arm that commonly consists of a pipe with holes facing the plate allowing the deposition of strips of batter. If batter is not cleanly deposited through the batter arm holes onto the plates when they are open, then batter may dribble over the closed plates or there may not be good coverage of each plate. This can lead to burning of the batter as it passes through the oven. Batter which is too viscous and tailing due to gluten formation results in such poor processing conditions. Moreover when the batter is too thick the batter flow rate is reduced through the holes and as a consequence a lower amount of batter is deposited. Accordingly it is more difficult to produce complete wafers.

Traditionally, proteases (e.g. Veron W) are added to the batter to cope with gluten formation. However, addition of protease is insufficient to prevent gluten formation at the high solids contents that are needed to reach high wafer densities, for instance greater than 35 mg/cm³.

Commonly starch is added to dilute the gluten in the flour and improve the processability of batters comprising flour with high protein content. However starch does not result in a more dense batter, nor an increase of the wafer weight without affecting its geometrical dimensions. Thus, it is not used to increase the weight of the wafer, but only to allow the use of flours that present processing difficulties due to their protein content.

Publication by Manuharkumar B et Al : "Mischmehle mit indischem mais fuer die herstellung von muoerbkeks und flachwaffeln », Getreide Mehl und brot, Bochum, DE, Vol. 32, n. 5 May, 1st 1978, p. 121-124, XP000853876, discloses a no-sugar wafer batter, comprising flour, water and edible solid particles, such as corn flour.

Publication by Steffi Hempel et al, "Influence of inulin modification and flour type on the sensory quality of prebiotic wafer crackers", European Food Research and technology; Zeitschrift fur lebensmitteluntersuchung und forschund A, Springer, Berlin, DE, Vol. 224, n.3, 31 March 2006 (2006-03-31), pages 335-341, XP 019458174, discloses a no-sugar wafer crackers batter and the final wafer cracker product.

Patent application EP1393631 discloses a confectionery product comprising two outer wafer layers,optionally one or more inner wafer layers and cream fillings between the wafer layers, wherein the wafer layers are made from a material which includes cocoa powder. The cocoa wafer layers improve the crunchy texture of the confectionery product.

Document by Lakshminarayan et al; J. Sci Food Agric., 86. 706-172, (2006), XP-002543095 relates to the study of the effect of fat replacement by maltodextrines on cake batter viscosity.

Accordingly, there is a need for a high density wafer which overcomes the problems discussed above, in particular in relation to the processability of the wafer batter during production.

### Summary of the invention

The invention provides a no- or low-sugar wafer having a density of at least 400 mg/cm³. This wafer has a particularly high density which is associated with advantageous properties, such as increased crispiness and improved handling.

According to one_aspect the invention provides a wafer batter for producing a no- or low-sugar wafer which comprises flour, water and edible, solid particles that do not swell or dissolve prior to baking of the batter. Surprisingly, despite increased solids content, this batter has good processability.

Preferably the solid particles have an average particle size from 70 to 400 µm. The wafer batter comprises from 3 to 15 % by weight of solid particles based on the weight of the wafer batter. The solid particles comprise carbohydrate, in particular a hydrolysed starch having a DE of less than 40, more preferably less than 30 or less than 20 o. The solid particles are maltodextrins. Preferably the wafer batter has a viscosity of no greater than 160 seconds as measured with a flow cup at 25 °C. Advantageously, batters containing such solid particles have surprisingly good processability.

The invention also provides a process for making a no- or low-sugar wafer as described in claim 5. Advantageously this method is very similar to traditional methods of making wafers and so only minor modifications will be required in order for existing processes to be adapted to produce a high density wafer in accordance with the invention.

Further a wafer which is obtained from a wafer batter as described herein or by a process as described herein is provided. A preferred wafer composition comprises 60-90 wt % flour, 1-3 wt % water, 0-2 wt % fat, 0-10 wt % sugar, 0-0.2 wt % lecithin, 0-0.2 wt % sodium bicarbonate and 3-30 wt % solid particles based on the weight of the wafer.

According to a further aspect a food product comprising a wafer as described herein and another edible material is provided. Finally the invention provides the use of edible, solid particles in the production of a wafer to increase the density of the wafer and/or to decrease the viscosity of the wafer batter, whereby the solid particles do not swell or dissolve prior to baking of the wafer batter and whereby the solid particles solubilise during baking of the wafer to become part of the wafer matrix.

### Brief description of the drawings

Fig. 1 shows the effect of maltodextrins on batter viscosity and wafer density.
Fig. 2 shows the effect of water on batter viscosity and wafer density.

### Detailed description of the invention

The invention consists of using edible, solid particles (being maltodextrins) in a wafer batter recipe to:
- increase the density of the batter, decrease the viscosity of the batter and improve its processability;
- increase wafer density and/or wafer weight without altering its thickness.

The edible, solid particles do not swell or dissolve prior to baking of the wafer batter, but solubilise during baking of the wafer to become part of the wafer matrix. Thus, such particles do not dissolve in a wafer batter composition which comprises 100 parts flour, 110 parts water, 2 parts fat, 2 parts sugar, 0.2 parts lecithin, 0.2 parts sodium bicarbonate and 0.05 parts enzyme (Veron W) at a temperature of 35 °C in less than 90 minutes, preferably less than 60 and more preferably less than 30 minutes, while being stirred in a batter holding tank or re-circulated in pipes from a batter plant to a wafer oven. Of course the particles may solubilise over periods of time longer than 90 minutes. Accordingly, in a typical method of making a wafer batter as described herein, the edible, solid particles will not swell or dissolve prior to baking of the wafer batter, but will solubilise during baking of the wafer to become part of the wafer matrix.

Edible, solid particles that are used in accordance with the invention typically comprise a carbohydrate. In particular, the solid particles comprise hydrolysed starches having a Dextrose Equivalents (DE) of less than 40, more preferably less than 30 or less than 20. Edible solid particles are maltodextrins, for example monodistributed maltodextrins, fructooligosaccharides and resistant dextrins such as Nutriose^{®}. Mixtures of any of these solid particles may be used in accordance with the invention. Typically the solid particles are added to the wafer batter composition as a powder.

The present invention relates to no- or low sugar wafers, which are defined as wafers containing from 0 to 10 % by weight sweetener, preferably from 0 to 8 % by weight sweetener, and more preferably from 0 to 5 % by weight sweetener based on the weight of the wafer. The sweetener is soluble in the batter mixture, i.e. it will dissolve in a wafer batter composition which comprises 100 parts flour, 110 parts water, 2 parts fat, 2 parts sugar, 0.2 parts lecithin, 0.2 parts sodium bicarbonate and 0.05 parts enzyme (Veron W) at a temperature of 35 °C in less than 30 minutes, with stirring. The sweetener is a monosaccharide, a disaccharide or a starch hydrolysate of DE greater than 40, preferably greater than 50 or greater than 60, or an inulin hydrolysate having a Fructose Equivalent of greater than 40, preferably greater than 50 or greater than 60, or mixtures of two or more of these sweeteners. Examples of such sweeteners include sucrose, glucose, lactose, maltose, fructose and crystalline hydrate formers such as isomaltose, trehalose, or raffinose. Typically the sweetener is added to the wafer batter composition in a syrup form so that it solubilises as quick as possible.

The sweeteners, more generally referred to as sugars, are used to primarily develop flavour and give a brown colour to the wafer. The high DE of the sweeteners or sugars is used to promote Maillard reactions to create the baked flavour and the colour.

In contrast, the solid particles are not used to sweeten or generate flavour or colour but to increase wafer density. The solid particles that we use have low DE and hence generate lower levels of Maillard reaction rates during baking. Moreover the low DE (<40) starch hydrolysates (e.g. maltodextrins) have a much slower dissolution rate than the high DE (>40) starch hydrolysates, which leads to the advantageous properties of the invention.

Thus, the edible solid particles are not considered to be sugar or sweeteners in that they do not contribute to the sugar or sweetener content when considering if a wafer is a "no- or low-sugar wafer". Accordingly, the wafers of the invention have the texture, taste and characteristics of no- or low-sugar wafers and they are produced by methods typically used for making no- or low-sugar wafers. It is noted that it is not possible to make wafers containing more than 10 % by weight of sweeteners having a DE greater than 60 by the typical methods for making low-sugar wafers because the wafers will stick to the baking plates. Further, the wafers of the invention do not have the characteristic of high sugar wafers that the wafer can be reformed into different shapes before sugar recrystallisation occurs.

The method of the invention is useful for the production of no- or low-sugar wafers and any suitable wafer batter recipe known to the skilled person may be used. A typical wafer batter may comprise around 35 to 50 wt % water and 35 to 50 wt % flour and generally the water:flour ratio is greater than approximately 1:1. In accordance with the invention, the water:flour ratio is less than 1.2:1, more preferably less than 1.1:1, and even more preferably less than 1:1. The invention also allows the production of wafer batters having a water:flour ratio of less than 1:1, for example less than 0.9:1, or in the range of from approximately 0.80:1 to 1:1, more preferably approximately 0.85:1. This is because the addition of edible, solid particles to the batter decreases the viscosity of the batter and so the batter may be deposited through the holes of a traditional batter arm, despite the high solids content in the batter.

Common formulations may also comprise at least one of the following ingredients: fat and/or oil, an emulsifier such as lecithin, sugar, whole egg, salt, sodium bicarbonate, ammonium bicarbonate, milk, milk powder, e.g. skim milk powder, fruit powders, cocoa powder, malt extract, bran (flour and/or bits), flavouring and/or colouring agents, soy flour, leavening agents, e.g. yeast, and/or enzymes such as xylanases or proteases, for example. The ingredient mix may further comprise pieces of edible material. Examples of such pieces can consist of parts of nuts, nut paste, almonds, sugar, chocolate, crunchy material, aerated material amongst others. It may also include seed husks which can be found in plain flour, for instance. Accordingly, the present invention allows for a great variability in the recipe.

Thus, a typical baked wafer batter may comprise 35-50 wt % flour, 0-10 wt % sugar, 0.05-1.8 wt % salt, 0-6 wt % oil or fat and from 50 to 65 wt % water.

The wafer may be a flat wafer either having geometric shapes or cartoon character shapes, as well as alphabet letters or numbers, for example. It can also be a three dimensional shaped wafer such as, for example, a cone, a cup, a dish. Wafer texture results from the generation of gas cells in a gel structure mainly composed of gelatinised starch. The high temperature of the baking plates induces a rapid gelatinisation of starch granules present in the flour and production and expansion of the gas bubbles inside the gelatinous matrix. These gas cells are, in the common practice, mainly generated from gassing agents such as added bicarbonates or from steam produced by heating. Therefore the wafer can be seen as a solid foam of gelatinised and dried starch/flour with dispersed gas cells (which can form an almost continuous phase in certain cases).

A wafer having a density of at least 400 g/cm³ is provided according to the invention. According to the invention such a wafer is produced by adding edible, solid particles to a wafer batter. Any method known to the skilled person may be adapted simply by the addition of edible, solid particles to the wafer batter at any time prior to baking of the batter. The inventive method is therefore particularly useful because minimal modifications of known methods are required.

The edible, solid particles do not swell in the presence of water and act to physically interfere with the formation of gluten strands and so many types of particles may be used in accordance with the invention. The solid particles should not take up water and swell when added to the batter mixture because this will make the batter viscous and difficult to process. In accordance with typical procedures the particles do not take up water or swell during mixing of the batter for a period of at least 1 hour, preferably 2 hours and most preferably 3 hours. Edible solid particles are maltodextrins, for example monodistributed maltodextrins, fructooligosaccharides and resistant dextrins such as Nutriose^{®}. Mixtures of any of these solid particles may be used in accordance with the invention.

Preferably the solid particles have an average particle size from 70 to 400 µm, more preferably from 100 to 300 µm and most preferably from 15 to 200 µm.

The solid particles are added to a wafer batter at a concentration of from 3 to 15 % by weight, more preferably from 5 to 12 % by weight, most preferably from 7 to 8% by weight, based on the weight of the batter.

Concentrations of solid particles in the final wafer are preferably from 5 to 30 % by weight, more preferably from 8 to 22 % by weight or from 12 to 15 % by weight, or most preferably from 12 to 13 % by weight, based on the weight of the wafer.

The concentrations of the solid particles in the batter and the wafer are not the same because of the different amount of water in the batter compared to the wafer. In the batter there is water present up to approximately 50 % by weight of the batter, which dilutes the concentration of the other components. However, in the wafer the water content is reduced to approximately 1.5 % by weight of the wafer.

The solid particles may be added to the wafer batter at any time prior to cooking of the batter. For example, edible, solid particles may be added at the start of the mixing of the ingredients directly to the water, or may be first mixed with the flour prior to addition of the flour to the water, or may be added later during the mixing of the ingredients, or may be added immediately prior to baking of the wafer. However, it may be advantageous to add the solid particles early in the procedure, during the mixing of the ingredients, since the particles improve the processability of the batter.

Accordingly, the edible, solid particles may be added at the start of mixing of the ingredients or subsequently. The batter may be prepared in any manner known to the skilled person. Thus, the ingredients may be mixed for from 2 minutes to 10 minutes. Then the batter may be held for from 30 minutes to 1 hour, preferably approximately 45 minutes. The mixing and holding steps are usually carried out at room temperature, for example from 20 to 35 °C, preferably approximately 25 °C.

The batter may be baked for approximately 1 to 5 minutes, preferably from 2 to 2.5 minutes. The baking temperature is preferably from 140 to 180 °C.

The addition of solid particles has two actions. Firstly, the solid particles do not absorb water and so stay 'dry' in the batter. This is advantageous during at least some stages of the process, such as mixing, transfer of the batter between tanks, transfer to the oven, recirculation to the holding tank from the oven and pumping to the deposition arm. The action of these dry particles is to destructure the gluten network and allow the batter to be very smooth without any tailing during deposition.

As discussed above, a batter which has poor processability can cause problems in the wafer making process in that it can lead to difficulties in cleanly depositing batter onto the oven plates, inconsistent coverage of the plates and burning of excess batter which is forced out of over-filled plates. Excess batter can also lead to wafers not being released at the correct time and becoming trapped on the plates. A batter with good processability is one that enables the production of complete wafer sheets without release issues.

The use of batters that are too viscous and tailing due to gluten formation results in such poor processing conditions. Accordingly good processability is defined herein as a batter having a viscosity of no greater than 160 seconds as measured with a flow cup. Most preferably a batter with good processability has a viscosity of no greater than 130 seconds, 100 seconds, 90 seconds, 85 seconds, 80 seconds or 75 seconds as measured with a flow cup. The batter viscosity is measured using a flow cup device that gives the time for 500g of batter to flow through a hole from a conical container at 25 °C. As described herein, a flow cup value is expressed in seconds and is related to the viscosity of the batter. A flow cup value is obtained by measuring the time taken for 500g of batter to flow through a conical cup that is suspended above a receiving container placed on a balance. Typically the cup is conical, 180mm high, 120mm diameter at the top, 20mm diameter at the bottom with a hole of 10mm diameter. The higher the value obtained the higher is the viscosity of the batter. Values given are always within a range of variability of +/- 10 seconds due to the method of measurement.

The second action of the solid particles is to act as a food grade filler that will increase the batter density and the wafer weight without affecting the wafer thickness. The advantage of this is to increase the wafer crispness. Further, in a layered food product, such as KIT KAT^{®}, it may allow the use of different ratios of filling to wafer. A particular advantage of the method of the invention is that it allows the production of a high density wafer using a traditional process, with only the minor modification of adding solid particles during mixing of the batter. There is no requirement to use different equipment and in particular there is no requirement to alter the distance between the baking plates. There is also no requirement to modify processing conditions. Thus, a wafer having the same thickness but a higher weight, and therefore density, may be achieved.

The solid particles will dissolve in the batter upon heating during baking. Thus, the particles will become part of the wafer matrix during baking and will not be detectable in the wafer.

A suitable way of determining an increase in wafer density may be to consider the weight of wafers having a standard thickness and volume, i.e. to consider two wafers made by the same method using the same baking plates. Thus, by comparing the weight of two wafers having the same thickness and volume, it is possible to determine their relative densities. From two wafers having the same volume, the wafer with the highest weight will also have the higher density.

The wafers described herein may be presented to the consumer as a wafer by itself, but it may also be further processed to form a confectionery or savoury food product or a pet food. Therefore, the present invention also comprises a food product comprising a wafer as described herein and another edible material. The other edible material may be a confectionery, savoury or pet food material. For example, suitable confectionery materials include chocolate, jelly, compound chocolate, ice-cream, sorbet, nut paste, cream, cream-based products, cake, mousse, nougat, caramel, praline, jam, a low-fat or low-calorie filling, a fruit jam, a real fruit filling, or combinations thereof Suitable savoury materials include fish or meat paste, cheese-based materials, vegetable puree, or combinations thereof. One or more other edible materials may be included as a filling for the wafer or the wafer may be the centre or part of the centre of the food product. The wafer may be in direct contact with the food material in the presence or absence of a moisture barrier.

### Examples

The following examples are illustrative of the products and methods of making the same falling within the scope of the present invention. They are not to be considered in any way limitative of the invention. Changes and modifications can be made with respect to the invention.

### Example 1 - the effect of the solid particles on the batter viscosity

A wafer batter was made according to a typical recipe which comprises (in parts):

| | |
|---|---|
| Flour | 100 |
| Water | 110 |
| Fat | 2 |
| Sugar | 2 |
| Lecithin | 0.2 |
| Sodium bicarbonate | 0.2 |
| Enzyme (Veron W) | 0.05 |

Additional wafer batters were made which additionally contained monodistibuted maltodextrins (01910 C*Dry from Cargill^{®}) at levels of 5, 10, 15, 20, 25 and 30 parts. Parts of maltodextrins refer to the number of parts with respect to 100 parts of flour as described in the given recipe. They correspond respectively, to concentrations of 2.3, 4.5, 6.5, 8.5, 10.5 and 12.3 % by weight in the batter and 4.2, 8.1, 11.6, 14.9, 18.0 and 20.8 % by weight in the wafer.

The ingredients were mixed in the same way as traditional batter: water was transferred into the mixing vessel (Morton APW 100 from Morton Machines Ltd, UK), then all of the ingredients (except for the flour) were added while the mixer was running, and finally the flour was added while the mixer was still running. The premix was mixed for another 30 to 60 seconds after the whole flour was added. The premix was then transferred to the batter holding tank through an Oakes continuous automatic mixer, (from E.T. Oakes Ltd, UK).

The wafers were prepared by baking the batters for 2 minutes in an oven (25-plate wafer oven, Hebenstreit Moerfelded, West Germany) between two metal plates heated to 130 °C. After short cooling, samples were hydrated in climatic chambers at the desired water activity (Aw) for 15 days before mechanical testing. The Aw was measured in each sample after hydration to verify the correct hydration of the sample.

The viscosity of the batter was measured with a flow cup by measuring the time taken for 500g of batter to flow through a conical cup that is suspended above a receiving container placed on a balance. The cup is conical, 180mm high, 120mm diameter at the top, 20mm diameter at the bottom with a hole of 10mm diameter. Values given are within a range of variability of +/- 10 seconds due to the method of measurement.

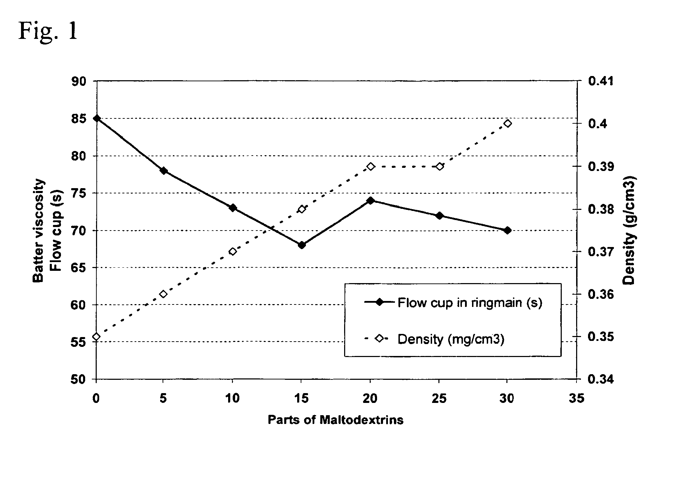

Fig. 1 shows the effect of the maltodextrins on the batter viscosity and the density of the resulting wafers. Surprisingly it was found that as the level of solid particles (maltodextrins) increases from 0 parts maltodextrins to 15 parts maltodextrins, the viscosity of the batter decreases, even though the water flour ratio is constant. This shows the effect of the solid particles as they act to physically interfere with the formation of gluten strands, thereby hindering the formation of a gluten network in the batter and improving processability. Above 15 parts maltodextrins no increase in viscosity is observed, although the density of the wafer is still increasing. The use of the solid particles in the batter thus decreases and stabilises the viscosity of the batter. As it is known that low viscosities are required for easy processing of batters, it is apparent that the use of the solid particles in the batter also allows the production of a batter which is consistently easily processable.

From Fig. 1 it can also be seen that as the level of solid particles (maltodextrins) increases from 0 parts maltodextrins to 30 parts maltodextrins, the density of the wafer increases. Thus baking of the easily processable batter produces very high density wafers. Moreover, this property of the maltodextrins allows the use of a wider range of flour qualities to bake wafers.

### Example 2 - the effect of the solid particles on the batter viscosity

Wafer batters were made according to a typical recipe which comprises (in parts):

| | |
|---|---|
| Flour | 100 |
| Water | 85 to 110 |
| Maltodextrins | 15 |
| Fat | 2 |
| Sugar | 2 |
| Lecithin | 0.2 |
| Sodium bicarbonate | 0.2 |
| Enzyme (Veron W) | 0.05 |

The maltodextrins are C*dry 01910 corn maltodextrins from Cargill^{®}, as described in Example 1. They have a particle size range of from 75 to 400 µm.

Specifically four batters were made containing 85, 90, 100 and 110 parts water respectively. Parts of water refer to the number of parts with respect to 100 parts of flour as described in the given recipe. The corresponding concentrations of maltodextrins are 7.9, 7.7, 7.4 and 6.5 % by weight in the batter. The concentration of maltodextrins in the wafer is constant, at 11.6 % by weight, because the level of maltodextrin (vs flour) is constant.

The wafers were prepared as described in Example 1.

The weight of the wafer was measured on a balance. The volume of the wafer was calculated from the thickness of the wafer and the geometry of the wafer. The density of the wafer was calculated by divided the weight by the volume. Batter viscosity was measured by the flow cup measurement as in Example 1.

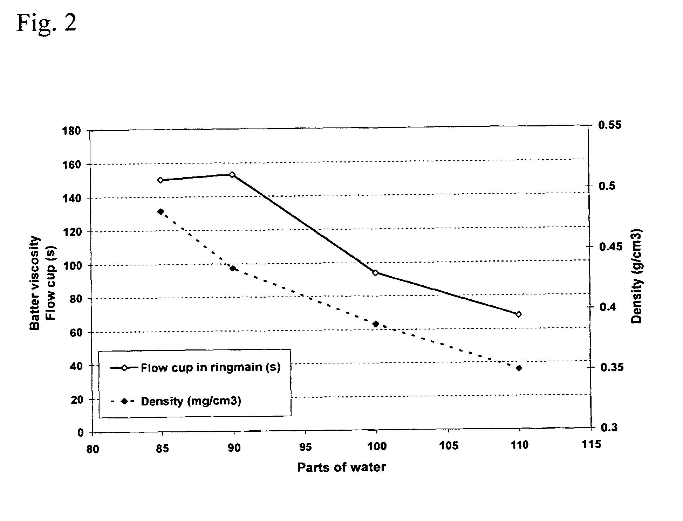

Fig. 2 shows the effect of water on the viscosity of batters containing maltodextrins and the density of the resulting wafers. Fig. 2 shows that for batters each containing the same amount of maltodextrins, as the amount of water is reduced, the viscosity of the batter is increased. At very low levels of water (such as 85 parts), the batter is close to a dough and would be very difficult to run through the piping system and deposit on the wafer plate in the oven through a classic batter arm. However, surprisingly, for two batters having the same viscosity, the batter containing maltodextrins has less water than the batter containing no maltodextrins. Thus, the addition of maltodextrins to a batter ensures that less water is required in the batter to achieve a certain viscosity, as compared to a batter not containing maltodextrins. In addition, the batter containing maltodextrins will produce a higher density wafer.

Fig. 2 also shows that for batters each containing the same amount of maltodextrins, when the amount of water is reduced, the density of the wafer is increased. The higher the concentration of maltodextrins, the greater is the density that can be reached, while maintaining a processable batter with an acceptable viscosity level.

Surprisingly, these results show that it is possible to produce a batter having a very low water:flour ratio (0.85), which also has a low viscosity, by the addition of maltodextrins. In contrast, for batters not containing maltodextrins and having a water:flour ratio lower than 1:1, it is not possible to obtain a flow cup measurement because the batter does not flow and so these batters, having a very high solids content, cannot be deposited through the holes of the traditional batter arm. The batters of the invention have improved processability, whilst allowing the production of very high weight wafers without affecting the wafer thickness.

## Claims

1. A wafer batter for producing a no- or low-sugar wafer, containing from 0 to 10% by weight sweetener based on the weight of the wafer wherein the sweetener is a monosaccharide, a disaccharide or a starch hydrolysate of DE greater than 40, or an inulin hydrolysate having a Fructose Equivalent of greater than 40, or mixtures of two or more of these sweeteners, which wafer batter comprises flour, water and edible, solid particles comprising hydrolysed starch having a DE of less than 40, more preferably less than 30 or less than 20, wherein the wafer batter comprises from 3 to 15 % by weight of solid particles based on the weight of the wafer batter and wherein the solid particles are maltodextrin.

2. A wafer batter according to claim 1 wherein the solid particles have an average particle size from 70 to 400 µm.

3. A wafer batter according to any of claims 1 or 2 wherein the wafer batter has a viscosity of no greater than 160 seconds as measured with a flow cup at 25 °C.

4. A wafer batter according to any of claims 1 to 3 wherein water:flour ratio is less than 1.2:1, preferably less than 1.1:1, and more preferably less than 1:1.

5. A wafer batter according to anyone of claims 1 to 4, wherein the sweetener is selected in the group consisting of: sucrose, glucose, lactose, maltose, fructose and crystalline hydrate formers such as isomaltose, trehalose, and raffinose.

6. Process for making a no- or low-sugar wafer, containing from 0 to 10% by weight sweetener based on the weight of the wafer wherein the sweetener is a monosaccharide, a disaccharide or a starch hydrolysate of DE greater than 40, or an inulin hydrolysate having a Fructose Equivalent of greater than 40, or mixtures of two or more of these sweeteners, comprising the steps of making a batter by mixing at least flour, water and edible, solid particles comprising hydrolysed starch having a DE of less than 40, more preferably less than 30 or less than 20, and baking the batter on at least one hot surface, whereby the solid particles do not swell or dissolve prior to baking of the wafer, but solubilise during baking to become part of the wafer matrix, wherein the wafer batter comprises from 3 to 15 % by weight of solid particles based on the weight of the wafer batter and wherein the solid particles are maltodextrin.

## Patentansprüche

1. Waffelteig zur Herstellung einer Waffel ohne oder mit niedrigem Zuckergehalt, die basierend auf dem Waffelgewicht von 0 bis 10 Gew.-% Süßungsmittel enthält, wobei das Süßungsmittel ein Monosaccharid, ein Disaccharid oder ein Stärkehydrolysat mit einem DE-Wert (Dextrose-Äquivalent) größer 40, oder ein Inulinhydrolysat mit einem Fruktose-Äquivalent größer 40 ist, oder Mischungen von zwei oder mehr dieser Süßungsmittel ist, wobei der Waffelteig Mehl, Wasser und essbare, feste Bestandteile aufweist, die hydrolysierte Stärke mit einem DE-Wert von weniger als 40, weiter bevorzugt weniger als 30 oder weniger als 20 besitzen, wobei der Waffelteig basierend auf dem Gewicht des Waffelteiges von 3 bis 15 Gew.-% feste Bestandteile aufweist, und wobei die festen Bestandteile Maltodextrin sind.

2. Waffelteig nach Anspruch 1, wobei die festen Bestandteile eine durchschnittliche Partikelgröße von 70 bis 400 µm aufweisen.

3. Waffelteig nach einem der Ansprüche 1 oder 2, wobei der Waffelteig eine Viskosität von nicht mehr als 160 Sekunden, gemessen mit einem Auslaufbecher bei 25°C, besitzt.

4. Waffelteig nach einem der Ansprüche 1 bis 3, wobei das Verhältnis Wasser:Mehl weniger als 1,2:1, vorzugsweise weniger als 1,1:1, und weiter bevorzugt weniger als 1:1, beträgt.

5. Waffelteig nach einem der Ansprüche 1 bis 4, wobei das Süßungsmittel aus der Gruppe ausgewählt ist, die folgendes aufweist: Saccharose, Glukose, Laktose, Maltose, Fruktose und kristalline Hydratbildner, wie z.B. Isomaltose, Trehalose und Raffinose.

6. Verfahren zur Herstellung einer Waffel ohne oder mit geringem Zuckergehalt, die basierend auf dem Waffelgewicht von 0 bis 10 Gew.-% Süßungsmittel enthält, wobei das Süßungsmittel ein Monosaccharid, ein Disaccharid oder ein Stärkehydrolysat mit einem DE-Wert (Dextrose-Äquivalent) größer 40, oder ein Inulinhydrolysat mit einem Fruktose-Äquivalent größer 40 ist, oder Mischungen von zwei oder mehr dieser Süßungsmittel ist, das die Schritte der Teigherstellung aufweist, indem mindestens Mehl, Wasser und essbare, feste Bestandteile, die hydrolysierte Stärke mit einem DE-Wert von weniger als 40, vorzugsweise weniger als 30 oder weniger als 20 aufweisen, vermischt werden, und der Teig mindestens auf einer heißen Oberfläche gebacken wird, wobei die festen Bestandteile vor dem Backen der Waffel nicht aufgehen oder auseinanderfließen, sondern während des Backens solubilisieren, so dass sie Teil der Waffelmatrix werden, wobei der Waffelteig basierend auf dem Gewicht des Waffelteiges von 3 bis 15 Gew.-% feste Bestandteile aufweist, und wobei es sich bei den festen Bestandteilen um Maltodextrin handelt.

## Revendications

1. Pâte pour gaufrettes destinée à la production d'une gaufrette sans sucre ou à faible teneur en sucre, comprenant de 0 à 10 % en poids d'édulcorant sur la base du poids de la gaufrette, dans laquelle l'édulcorant est un monosaccharide, un disaccharide ou un hydrolysat d'amidon ayant un équivalent en dextrose (DE) supérieur à 40, ou un hydrolysat d'inuline ayant un équivalent en fructose supérieur à 40, ou des mélanges de deux ou plus de ces édulcorants, laquelle pâte pour gaufrettes comprend de la farine, de l'eau et des particules solides comestibles comprenant de l'amidon hydrolysé ayant un DE inférieur à 40, plus préférablement inférieur à 30 ou inférieur à 20, dans laquelle la pâte pour gaufrettes comprend de 3 à 15 % en poids de particules solides sur la base du poids de la pâte pour gaufrettes et dans laquelle les particules solides sont de la maltodextrine.

2. Pâte pour gaufrettes selon la revendication 1, dans laquelle les particules solides ont une taille moyenne de particule comprise entre 70 et 400 µm.

3. Pâte pour gaufrettes selon l'une quelconque des revendications 1 ou 2, dans laquelle la pâte pour gaufrettes présente une viscosité qui n'est pas supérieure à 160 secondes, mesurée avec une coupe consistométrique à 25°C.

4. Pâte pour gaufrettes selon l'une quelconque des revendications 1 à 3, dans laquelle le rapport eau:farine est inférieur à 1,2:1, de préférence inférieur à 1,1:1, et plus préférablement inférieur à 1:1.

5. Pâte pour gaufrettes selon l'une quelconque des revendications 1 à 4, dans laquelle l'édulcorant est choisi parmi le groupe constitué de : saccharose, glucose, lactose, maltose, fructose et agents de formation d'hydrate cristallin comme par exemple isomaltose, tréhalose et raffinose.

6. Procédé de fabrication d'une gaufrette sans sucre ou à faible teneur en sucre, comprenant de 0 à 10 % en poids d'édulcorant sur la base du poids de la gaufrette, dans laquelle l'édulcorant est un monosaccharide, un disaccharide ou un hydrolysat d'amidon ayant un équivalent en dextrose (DE) supérieur à 40, ou un hydrolysat d'inuline ayant un équivalent en fructose supérieur à 40, ou des mélanges de deux ou plus de ces édulcorants, comprenant les étapes consistant à fabriquer une pâte en mélangeant au moins de la farine, de l'eau et des particules solides comestibles comprenant de l'amidon hydrolysé ayant un DE inférieur à 40, plus préférablement inférieur à 30 ou inférieur à 20, et à cuire la pâte sur au moins une surface chaude, dans lequel les particules solides ne gonflent pas ou ne se dissolvent pas avant la cuisson de la pâte, mais se solubilisent au cours de la cuisson pour devenir une partie de la matrice de gaufrette, dans lequel la pâte pour gaufrettes comprend de 3 à 15 % en poids de particules solides sur la base du poids de la pâte pour gaufrettes et dans laquelle les particules solides sont de la maltodextrine.
